# EUROPEAN PATENT APPLICATION

(11) **EP 4 406 766 A2**
(43) Date of publication of application: **31.07.2024**
(21) Application number: 24152272.1
(22) Date of filing: 16.01.2024
(51) Int. Cl.: B60K 11/02

(54) **COOLING SYSTEM FOR ELECTRIC DRIVE DEVICE OF VEHICLE**

(30) Priority: 18.01.2023 CN 202310074734
(71) Applicant: Valeo eAutomotive Germany GmbH, 91056 Erlangen (DE)
(72) Inventor: JIN, Yejin, 91056 Erlangen (DE); ZHAO, Wanchao, 91056 Erlangen (DE); SUN, Yawei, 91056 Erlangen (DE)
(74) Representative: Valeo Powertrain Systems

(57) **Abstract**

The present invention relates to a cooling system for an electric drive device of a vehicle, characterized in that the electric drive device comprises a housing, a motor accommodated in a first space in the housing and a reducer accommodated in a second space in the housing; the cooling system comprises: a cooling pump, having a first suction port and a second suction port connected to the first space and the second space respectively, wherein the cooling pump is operatively configured to alternatively suck in cooling liquid from the first suction port or the second suction port; and a cooler connected to an outlet of the cooling pump to receive the cooling liquid sucked in from the first suction port or the second suction port.

## Description

### TECHNICAL FIELD

The present invention relates to the field of electric drive devices, in particular to a cooling system for an electric drive device of a vehicle.

### BACKGROUND

With the widespread use of electric drive devices in civil and commercial fields, electric drive device cooling is facing stricter requirements.

At present, in the cooling of vehicle electric drive devices, e.g. when cooling an electric drive device jointly formed by a motor and a reducer (wherein the motor and reducer are disposed inside a housing of the electric drive device), a cooling pump is generally provided with only one suction port, for sucking in cooling liquid from the reducer side and then conveying it into components that require to be cooled, such as the motor, the cooling liquid finally returning into the reducer under the action of gravity. However, when the vehicle is tilted due to a slope, etc., the suction port at the reducer side is unable to suck cooling liquid, and at the same time, a large amount of cooling liquid is stored at a non-drive end of the motor (i.e. an end that is not connected to the reducer), with the result that the suction port of the cooling pump will suck air, causing a large amount of air to enter the cooling system, considerably reducing the heat exchange efficiency in the cooling system.

Thus, there is a need for a cooling system which, on the precondition that effective suction of cooling liquid in an electric drive device is achieved, can accurately and reliably judge a cooling liquid position and realize cooling liquid suction, to reduce the probability of air suction (sucking air), the cooling system and a cooling pump for example having a small volume and manufacturing cost.

### SUMMARY

In response to the above problem, the present invention provides a cooling system for an electric drive device of a vehicle. Using the cooling system provided in the present invention, based on achieving effective suction of cooling liquid in an electric drive device, it is possible to accurately and reliably judge a cooling liquid position and realize cooling liquid suction, to reduce the probability of air suction (sucking air), the cooling system and a cooling pump for example having a small volume and manufacturing cost.

According to one aspect of the present invention, a cooling system for an electric drive device of a vehicle is proposed, characterized in that the electric drive device comprises a housing, a motor accommodated in a first space in the housing and a reducer accommodated in a second space in the housing; the cooling system comprises: a cooling pump, having a first suction port and a second suction port connected to the first space and the second space respectively, wherein the cooling pump is operatively configured to alternatively suck in cooling liquid from the first suction port or the second suction port; and a cooler connected to an outlet of the cooling pump to receive the cooling liquid sucked in from the first suction port or the second suction port.

In some embodiments, when one of the first suction port and the second suction port is in an air suction state, the cooling pump is operated to switch from sucking in cooling liquid from said one of the first suction port and the second suction port to sucking in cooling liquid from the other of the first suction port and the second suction port.

In some embodiments, said switching comprises: changing the rotation direction of the cooling pump.

In some embodiments, said one of the first suction port and the second suction port is determined as being in the air suction state when a predetermined change occurs in an output signal of the cooling pump or a predetermined change occurs in a vehicle state.

In some embodiments, said one of the first suction port and the second suction port is determined as being in the air suction state when a predetermined change occurs in an output signal of the cooling pump and a predetermined change occurs in a vehicle state.

In some embodiments, a predetermined change occurring in the output signal of the cooling pump comprises: the output signal of the cooling pump being lower than a preset output threshold.

In some embodiments, the output signal of the cooling pump comprises: at least one of an output current or voltage signal of the cooling pump, and an output torque signal of the cooling pump.

In some embodiments, a predetermined change occurring in the vehicle state comprises: the value of acceleration of the vehicle in a first direction exceeding a preset first acceleration threshold within a predetermined time, the first direction being an arrangement direction of the motor relative to the reducer.

In some embodiments, a predetermined change occurring in the vehicle state comprises: a height difference in a body structure of the vehicle in a first direction being greater than a preset first height difference threshold, the first direction being an arrangement direction of the motor relative to the reducer.

In some embodiments, the first suction port and the second suction port are arranged at different positions in a second direction, and a predetermined change occurring in the vehicle state comprises: the value of acceleration of the vehicle in the second direction exceeding a preset second acceleration threshold within a predetermined time period, the second direction being perpendicular to an arrangement direction of the motor relative to the reducer.

In some embodiments, the value of acceleration of the vehicle in the second direction exceeding a preset second acceleration threshold within a predetermined time period comprises: the value of acceleration of the vehicle in a first sub-direction of the second direction exceeding a corresponding preset second acceleration threshold within a predetermined time period, the first sub-direction of the second direction being a sub-direction from the first suction port towards the second suction port within the second direction; or the value of acceleration of the vehicle in a second sub-direction of the second direction exceeding a corresponding preset second acceleration threshold within a predetermined time period, the second sub-direction of the second direction being a sub-direction from the second suction port towards the first suction port within the second direction.

In some embodiments, the first suction port and the second suction port are arranged at different positions in a second direction, and a predetermined change of the vehicle state comprises: a height difference in a body structure of the vehicle in the second direction being greater than a preset second height difference threshold, the second direction being perpendicular to an arrangement direction of the motor relative to the reducer.

In some embodiments, a height difference of a vehicle body structure along the second direction being greater than a preset second height difference threshold comprises: a height difference which the vehicle body structure has along a first sub-direction of the second direction is greater than a corresponding second preset height difference threshold, the first sub-direction of the second direction being a sub-direction from the first suction port towards the second suction port in the second direction; or a height difference of the vehicle body structure has along a second sub-direction of the second direction is greater than a corresponding second preset height difference threshold, the second sub-direction of the second direction being a sub-direction from the second suction port to the first suction port in the second direction.

In some embodiments, the cooling system further comprises a first filter corresponding to the first space, and a second filter corresponding to the second space, wherein the size of the first filter is smaller than or equal to that of the second filter.

In some embodiments, the cooling system further comprises a third filter.

### BRIEF DESCRIPTION OF THE DRAWINGS

In order to describe the technical solution of embodiments of the present invention more clearly, the drawings to be used in describing the embodiments are briefly described below. Obviously, the drawings described below show only some embodiments of the present invention, and those skilled in the art may obtain other drawings based on these drawings without inventive effort. The drawings below have not been drawn meticulously in proportion according to actual dimensions, but focus on showing the substance of the present invention.
Fig. 1 shows an exemplary drawing of a cooling system 100 for an electric drive device according to an embodiment of the present invention in a first scenario.
Fig. 2 shows an exemplary drawing of the cooling system 100 for an electric drive device according to an embodiment of the present invention in a second scenario.
Fig. 3A shows a schematic drawing of the cooling pump in a first state according to an embodiment of the present disclosure.
Fig. 3B shows a schematic drawing of the cooling pump in a second state according to an embodiment of the present disclosure.
Fig. 4 shows a schematic drawing of a cooling system according to an embodiment of the present disclosure, showing a first filter 510 and a second filter 520.
Fig. 5 shows a schematic drawing of a cooling system according to an embodiment of the present disclosure, showing a third filter 530.

### DETAILED DESCRIPTION

The technical solution in embodiments of the present invention will be described clearly and completely below with reference to the drawings. Obviously, the embodiments described are merely some, not all, of the embodiments of the present invention. All other embodiments obtained by those skilled in the art based on embodiments of the present invention without inventive effort shall also fall within the scope of protection of the present invention.

As indicated in the present application and claims, unless otherwise expressly specified in the context, a word like "a", "one", "one type", and/or "said", instead of referring in particular to the singular, may also include the plural. Generally, the terms "comprise" and "include" only indicate inclusion of expressly identified steps and elements, but these steps and elements do not constitute an exclusive enumeration; a method or device may also include other steps or elements.

Although the present application makes various references to certain modules in the system according to embodiments of the present application, any number of different modules may be used and run on user terminals and/or servers. The modules are purely illustrative, and different modules may be used in different aspects of the system and the method.

In the present application, a flowchart is used to explain operations performed by a system according to an embodiment of the present application. It should be understood that the preceding or subsequent operations are not necessarily performed in a precise sequence. On the contrary, based on needs, various steps may be performed in reverse sequence or at the same time. In addition, other operations may also be added to these processes, or one or more steps may be removed from these processes.

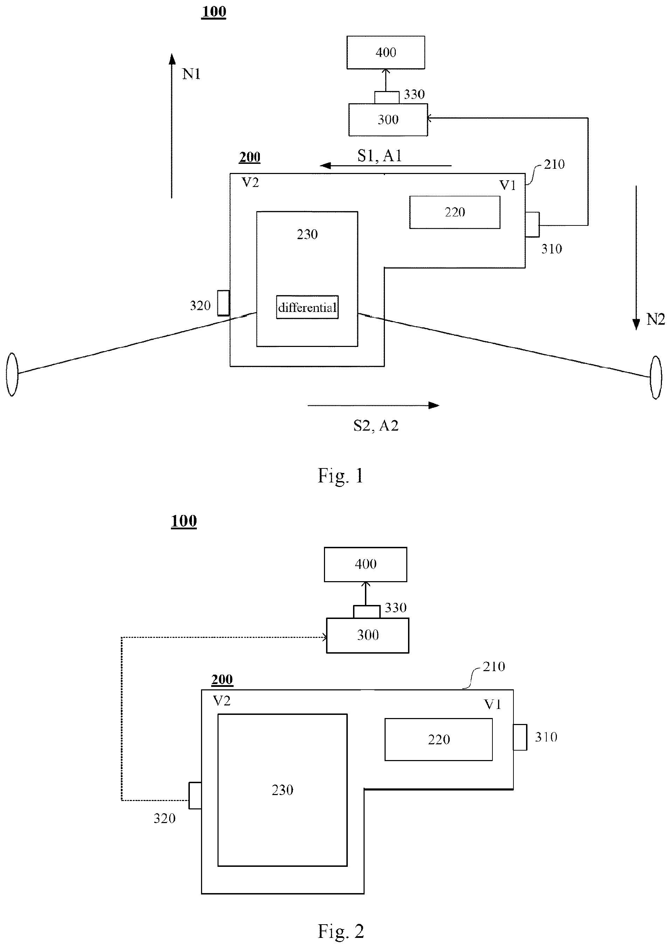

Fig. 1 shows an exemplary drawing of a cooling system 100 for an electric drive device according to an embodiment of the present invention in a first scenario; Fig. 2 shows an exemplary drawing of the cooling system 100 for an electric drive device according to an embodiment of the present invention in a second scenario.

Referring to Figs. 1 and 2, an electric drive device 200 is shown, the electric drive device 100 for example comprising a housing 210, a motor 220 accommodated in a first space V1 in the housing 210, and a reducer 230 accommodated in a second space V2 in the housing 210.

It should be understood that the electric drive device is an apparatus which is driven to operate by means of electric power. As an example, the motor can convert inputted electrical energy to rotational mechanical energy; the reducer is mechanically coupled to the motor, adjusts the speed of rotation and the torque generated by the motor, and then transmits same to wheels of the vehicle. The motor may for example be an oil-cooled motor, e.g. a synchronous motor, or may be an asynchronous motor. Embodiments of the present disclosure are not restricted with regard to the specific type of the motor, and are not restricted with regard to the specific type of the reducer.

In addition, in real examples of the present application, the reducer 230 is connected to the motor 220. The reducer 230 can convert high speed and low torque of the motor 220 to low speed and high torque. Depending on actual needs, the reducer 230 may for example comprise multi-stage speed reduction gears, connected to the motor 220 and a differential and having different speeds. One of these gears is driven by the motor 220 for example, thereby increasing torque by speed reduction. The reducer 230 may for example further comprise an intermediate transmission shaft, which may be connected to a gear driven by a drive shaft of the motor 220 and another gear connected to the differential and having a larger diameter, so that a speed-reduced driving force is distributed between different wheels by the differential.

In a real example shown in the present application, the motor 220 is arranged transversely with respect to the reducer 230, i.e. a motor shaft is substantially parallel to a half-shaft (drive shaft) of the vehicle, the motor 220 having a drive end mechanically coupled to the reducer 230, and a non-drive end remote from the reducer 230. It should be noted that the motor and the reducer may be arranged in another way.

It should be understood that the first space V1 and second space V2 are merely intended to distinguish between spaces used to respectively accommodate the motor and the reducer, not to limit the spatial form and volume thereof. The first space and the second space may for example be at least partially in communication with each other.

Still referring to Fig. 1, the cooling system 100 for example comprises: a cooling pump 300 and a cooler 400.

The cooling pump is a pump used to suck cooling liquid from inside the electric drive device. For example, the cooling pump may have: a first suction port 310, a second suction port 320 and an outlet 330, wherein the first suction port 310 and second suction port 320 are respectively connected to the first space V1 and the second space V2.

It should be understood that the first suction port and the second suction port are merely intended to distinguish between ports connected to different spaces, not to limit the ports; embodiments of the present disclosure are not restricted with regard to the specific positions where the first and second suction ports are disposed on the housing, nor by the specific shapes and dimensions thereof.

For example, the first suction port 310 may be disposed on the housing at the non-drive end at a rear side of the motor, thereby being connected to the first space; the second suction port 320 may for example be disposed on the housing at a front side of the reducer (e.g. the bottom of the housing), thereby being connected to the second space.

The cooling pump 300 is operatively configured to suck in cooling liquid alternatively from the first suction port 310 or the second suction port 320.

It should be understood that the word "alternatively" means that the cooling pump can only suck in cooling liquid from one of the first suction port and second suction port at the same time, and will not suck in cooling liquid from the first suction port and the second suction port simultaneously.

A first scenario in which the cooling pump sucks in cooling liquid from the first suction port is shown schematically by a solid line in Fig. 1; a second scenario in which the cooling pump sucks in cooling liquid from the second suction port is shown schematically by a dotted line in Fig. 2. It should be understood that as stated above, during actual operation of the cooling pump, cooling liquid can be sucked in from only one of the first suction port and second suction port.

For example, the rotation direction of the cooling pump may be changed to choose whether the cooling pump sucks in cooling liquid from the first suction port 310 or the second suction port 320, or another method may be used to control whether the cooling pump sucks in cooling liquid from the first suction port 310 or the second suction port 320.

The cooler 400 is connected to the outlet 330 of the cooling pump 300, to receive cooling liquid sucked in from the first suction port 310 or the second suction port 320.

The purpose of the cooler is to cool the cooling liquid from the cooling pump. Embodiments of the present disclosure are not restricted with regard to the specific type and composition of the cooler.

It should be understood that in the cooling system, cooling liquid at a required temperature which is outputted after processing in the cooler may for example be conveyed to a corresponding target component according to actual needs. For example, the cooling liquid may be simultaneously conveyed to the first space and second space of the electric drive device to further cool the motor and the reducer, or may be conveyed to another component, e.g. to a motor vehicle battery or engine to realize corresponding cooling. Embodiments of the present disclosure are not restricted with regard to the downstream flow path of the cooling liquid after processing in the cooler.

Based on the above, in the present application, the cooling pump can be simply and conveniently controlled according to actual needs to suck cooling liquid located at the motor or reducer and thus achieve effective cooling liquid suction, as a result of the fact that the cooling system is configured to comprise the cooling pump having the first suction port and second suction port respectively connected to the first space and the second space, the cooling pump being operatively configured to suck in cooling liquid alternatively from the first suction port or the second suction port. Compared with the current situation in which the cooling pump only sucks through a port at the reducer side, the fact that the cooling pump is configured to suck cooling liquid alternatively from the first suction port or second suction port in the present application makes it possible to significantly reduce the probability of air suction, preventing a large amount of air from entering the cooling system, and thereby effectively increasing heat exchange efficiency in the cooling system. In addition, in the present application, the cooling pump is flexibly configured so that the cooling pump sucks cooling liquid at only one port at one time, making it possible to effectively increase the operating efficiency and the efficiency of use of the cooling pump, and reduce the manufacturing volume and manufacturing cost of the cooling pump, thus facilitating the manufacture and installation of the cooling pump. Moreover, as a result of further configuring the cooler to be connected to the outlet of the cooling pump and to receive cooling liquid sucked in from the first suction port or the second suction port, the cooling system is able to flexibly distribute cooling liquid processed by the cooler to different components according to actual needs, to achieve a good cooling effect.

In some embodiments, when one of the first suction port 310 and the second suction port 320 is in an air suction state, the cooling pump is operated to switch from sucking in cooling liquid from said one of the first suction port 310 and the second suction port 320 to sucking in cooling liquid from the other of the first suction port 310 and the second suction port 320.

It should be understood that the "air suction state" referred to in the present application is a state in which there is a high risk of air being sucked in at said port, and the suction port needs to be switched.

For example, if a predetermined change occurs in an output signal of the cooling pump, e.g. an output current of the cooling pump falls significantly, this may for example indicate that the cooling pump has encountered air suction at the port, in which case the port can be determined as being in the air suction state. As another example, if the electric drive device is installed on a motor vehicle, and a situation occurs in the motor vehicle such as turning left/right, sudden braking, sudden starting, going uphill or going downhill, which might for example cause the acceleration of the vehicle along or perpendicular to an arrangement direction of the motor relative to the reducer to exceed a preset acceleration threshold within a predetermined time period, then the risk of air suction occurring at the port is high due to the very high acceleration, so the port can also be determined as being in the air suction state at this time.

It should be understood that the air suction state in the present application may for example be judged on the basis of a single variable only; alternatively, depending on actual needs, the port state may be determined as being the air suction state only when multiple variables all experience a predetermined change.

For example, if the first suction port 310 is in the air suction state, then the cooling pump may for example be configured to change rotation direction, and suck in cooling liquid from the second suction port 320.

Based on the above, in the present application, when one of the first suction port and the second suction port is in the air suction state, the cooling pump is operated to switch from sucking in cooling liquid from said one of the first suction port and the second suction port to sucking in cooling liquid from the other of the first suction port and the second suction port; with this configuration, the port from which the cooling pump sucks in cooling liquid can be switched flexibly in real time on the basis of the air suction state, increasing the accuracy of cooling liquid suction, effectively preventing air suction scenarios, and increasing the heat exchange efficiency and operating efficiency of the cooling system.

In some embodiments, the cooling pump being operated to switch from sucking in cooling liquid from said one of the first suction port and the second suction port to sucking in cooling liquid from the other of the first suction port and the second suction port comprises: changing the rotation direction of the cooling pump.

For example, the rotation direction of the cooling pump may be controlled by a pump motor; for example, when the cooling pump rotates clockwise, it sucks in cooling liquid from the first suction port, and when the cooling pump rotates anticlockwise, it sucks in cooling liquid from the second suction port. However, it should be understood that cooling pump rotation has merely been illustrated above, and embodiments of the present disclosure are not limited to this.

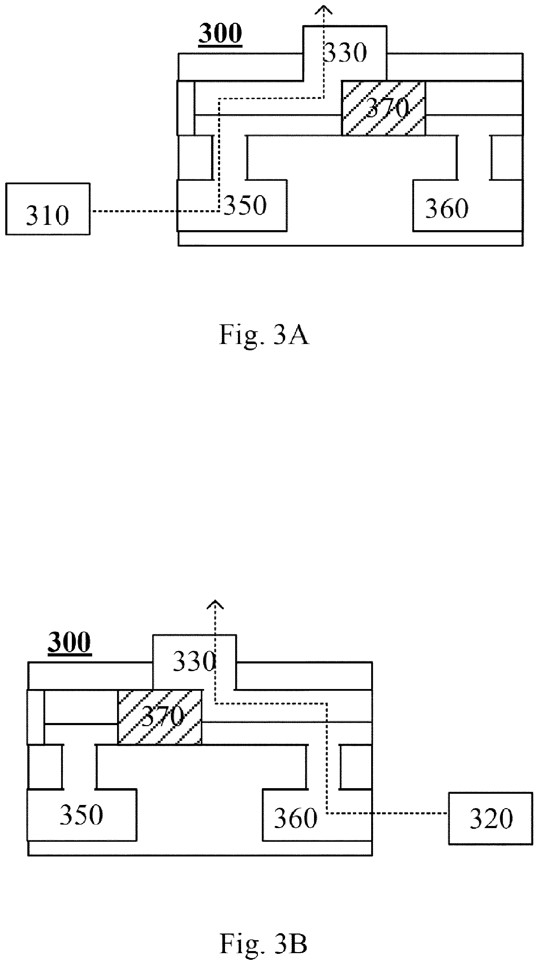

Fig. 3A shows a schematic drawing of the cooling pump in a first state according to an embodiment of the present disclosure. Fig. 3B shows a schematic drawing of the cooling pump in a second state according to an embodiment of the present disclosure.

As shown in Figs. 3A and 3B, the cooling pump is a bidirectional pump, e.g. a cycloid pump, which for example has a pump mechanism, a pump motor (not shown here), the first suction port 310, the second suction port 320 and the outlet 330. Moreover, the pump mechanism for example comprises a first one-way valve 350, a second one-way valve 360 and a three-way valve 370. The first one-way valve 350 is for example in communication with the first suction port 310, to introduce cooling liquid from the first suction port 310 into the pump mechanism, and the second one-way valve 360 is for example in communication with the second suction port 320, to introduce cooling liquid from the second suction port 320 into the pump mechanism. The three-way valve for example is configurably in communication with the first one-way valve 350, the second one-way valve 360 and the pump outlet 330, such that cooling liquid from the corresponding input port flows out of the outlet 330 of the cooling pump.

For example, if the pump motor controls the cooling pump to rotate clockwise, the cooling pump is for example in the first state in Fig. 3A, at which time the cooling pump will suck in cooling liquid from the first suction port 310 and guide the sucked-in cooling liquid into the pump mechanism via the first one-way valve 350, and the three-way valve is in a first position as shown in Fig. 3A due to the clockwise rotation of the cooling pump; in this position, the outlet 330 is isolated from the second one-way valve and the first one-way valve 350 is in communication with the outlet 330, such that cooling liquid guided into the pump mechanism via the first one-way valve 350 can flow out through the outlet 330.

For example, if the pump motor controls the cooling pump to rotate anticlockwise, the cooling pump is for example in the second state in Fig. 3B, at which time the cooling pump 300 will suck in cooling liquid from the second suction port 320 and guide the sucked-in cooling liquid into the pump mechanism via the second one-way valve 360, and the three-way valve is in a second position as shown in Fig. 3B due to the anticlockwise rotation of the cooling pump; in this position, the outlet 330 is isolated from the first one-way valve and the second one-way valve 360 is in communication with the outlet 330, such that cooling liquid guided into the pump mechanism via the second one-way valve 360 can flow out through the outlet 330.

Based on the above, in the present application, the rotation direction of the cooling pump is changed so that the cooling pump switches from sucking in cooling liquid from said one of the first suction port and the second suction port to sucking in cooling liquid from the other of the first suction port and the second suction port; with this configuration, the cooling pump suction port can be switched simply and conveniently, thus making it easier to switch ports at maximum speed when an air suction situation is discovered at one of the suction ports in actual applications, and thus minimize the amount of air sucked in.

In some embodiments, said one of the first suction port and the second suction port is determined as being in the air suction state if a predetermined change occurs in an output signal of the cooling pump 300 or a predetermined change occurs in a vehicle state.

It should be understood that a predetermined change occurring in an output signal of the cooling pump for example indicates that the output signal of the cooling pump experiences a predetermined change, which corresponds to the cooling pump being in the air suction state at the suction port. For example, the predetermined change may be that the output signal of the cooling pump is lower than a preset output threshold. However, it should be understood that embodiments of the present disclosure are not restricted with regard to the specific composition of the predetermined change.

A predetermined change occurring in the vehicle state means that a motor vehicle fitted with the electric drive device experiences a preset change, the predetermined change in the vehicle state indicating a risk of air suction at a suction port of the cooling pump, i.e. indicating that the cooling pump is in the air suction state at the suction port.

For example, depending on actual circumstances and the specific position and direction of installation of the electric drive device, predetermined changes in the vehicle state include but are not limited to: predetermined changes in the vehicle's horizontal acceleration (e.g. the vehicle is in a state of sharp turning) and front-rear acceleration (e.g. the vehicle is in a state of going uphill, going downhill, or stopping sharply/starting sharply), height differences in the vehicle body structure in the front-rear direction and left-right direction which cause tilting, etc.

It should be understood that embodiments of the present disclosure are not restricted with regard to the specific composition and specific type of the predetermined change in the vehicle state.

Based on the above, in the present application, said one of the first suction port and the second suction port is determined as being in the air suction state if a predetermined change occurs in an output signal of the cooling pump or a predetermined change occurs in the vehicle state; with this configuration, when judging the air suction state, the influence of the vehicle state of the motor vehicle carrying the electric drive device and the cooling pump operating state on judgement of air suction at the cooling pump port can be taken into account comprehensively, making it possible to distinguish the air suction state with high sensitivity in real time when a predetermined change occurs in the cooling pump signal or the vehicle state of the motor vehicle, increasing the sensitivity with which the air suction state is identified, and thus effectively reducing air suction situations.

In some embodiments, said one of the first suction port and the second suction port is determined as being in the air suction state when a predetermined change occurs in an output signal of the cooling pump and a predetermined change occurs in a vehicle state.

For example, an output signal of the cooling pump can be collected upon detecting that a predetermined change has occurred in the vehicle state (e.g. upon detecting that the vehicle turns sharply left/right, brakes suddenly, starts suddenly, has excessive acceleration when going uphill or downhill), and a judgement can be made as to whether a predetermined change has occurred in the output signal of the cooling pump. Alternatively, when a predetermined change occurs in an output signal of the cooling pump, the vehicle state can be further checked, and a judgement can be made as to whether a predetermined change has occurred in the vehicle state.

It should be understood that embodiments of the present application are not restricted with regard to the order in which a predetermined change is detected in the output signal of the cooling pump and a predetermined change is detected in the vehicle state; these two detecting actions may be performed in order, in reverse order or simultaneously.

Based on the above, in the present application, said one of the first suction port and the second suction port is determined as being in the air suction state only when a predetermined change occurs in the output signal of the cooling pump and a predetermined change occurs in the vehicle state; with this configuration, the accuracy with which the air suction state is judged can be effectively increased. Specifically, when judging the air suction state, comprehensive consideration is given to the fact that the cooling pump output signal might fluctuate due to unexpected circumstances in the operation of the cooling pump, and that the vehicle state of the vehicle might also be misinterpreted due to unexpected circumstances in the course of travel or the driver; at this time, by combining the output signal of the cooling pump and the vehicle state to perform judgement, cross-verification can be performed on the basis of multiple variables, preventing erroneous judgement of the air suction state and frequent or erroneous switching of suction ports due to error in the cooling pump output signal or the vehicle state, and thus increasing the reliability and precision of air suction detection.

In some embodiments, a predetermined change occurring in the output signal of the cooling pump comprises: the output signal of the cooling pump being lower than a preset output threshold.

The preset output threshold is a minimum output signal of the cooling pump that is set in advance; being lower than this minimum output signal indicates that the current suction port of the cooling pump is in the air suction state. Embodiments of the present disclosure are not restricted with regard to the specific value of the preset output threshold.

Specifically, the output signal of the cooling pump is associated with a change in load of the cooling pump. In general, an output current, voltage, torque, etc. of the cooling pump are for example positively correlated to the load of the cooling pump, i.e. the output signal of the cooling pump is larger when the cooling pump sucks in more cooling liquid, and the output signal of the cooling pump is smaller when the cooling pump sucks in less cooling liquid (at which time air might be sucked in at a high ratio); on this basis, it is clear that the output signal of the cooling pump being lower than the preset output threshold indicates that the current suction port of the cooling pump is in the air suction state.

Based on the above, in the present application, a predetermined change occurring in the output signal of the cooling pump comprises the output signal of the cooling pump being lower than a preset output threshold; with this configuration, the output signal of the cooling signal can be distinguished simply and conveniently, making it easier to quickly and reliably perform corresponding distinguishing on the basis of the output signal of the cooling pump, and thus increasing the reliability of the air suction state.

In some embodiments, the output signal of the cooling pump comprises: at least one of an output current or voltage signal of the cooling pump, and an output torque signal of the cooling pump.

The output current or voltage signal of the cooling pump is a current or voltage signal value outputted by the cooling pump and indicating an operating state of the cooling pump, and for example may be positively correlated to a load of the cooling pump and thereby indicate a load state of the cooling pump, i.e. is associated with whether the cooling pump is sucking air at the current suction port.

The output torque signal of the cooling pump is a signal indicating an operating torque of the cooling pump. When the cooling pump is in general rotating at a constant rotation speed, the output torque signal of the cooling pump for example may be positively correlated to a load of the cooling pump and thereby indicate a load state of the cooling pump, i.e. is associated with whether the cooling pump is sucking air at the current suction port.

Based on the above, in the present application, the output signal of the cooling pump comprises at least one of an output current or voltage signal of the cooling pump, and an output torque signal of the cooling pump; with this configuration, the air suction state of the cooling pump at the current suction port can be judged on the basis of output signals of multiple types, covering multiple aspects, of the cooling pump, helping to increase the accuracy and reliability of air suction state judgement.

In some embodiments, a predetermined change occurring in the vehicle state comprises: the value of acceleration of the vehicle in a first direction exceeding a preset first acceleration threshold within a predetermined time period, the first direction being an arrangement direction of the motor relative to the reducer.

The arrangement direction of the motor relative to the reducer is the direction of a straight line extending through the motor and the reducer, e.g. may be represented as the direction of a line connecting centre points of the motor and the reducer. For example, when the electric drive device is arranged in a transverse direction in the vehicle, the arrangement direction of the motor relative to the reducer is for example the transverse direction.

When the electric drive device is installed on the motor vehicle, the travelling state of the motor vehicle itself will also have a considerable impact on the distribution of cooling liquid inside the electric drive device. In particular, when the vehicle experiences high acceleration in the arrangement direction of the motor relative to the reducer, this will cause flow of the cooling liquid in the second space of the reducer and the first space of the motor, with a large amount of cooling liquid moving from the first space to the second space or from the second space to the first space, thus causing the air suction state to occur at the current suction port.

It should be understood that the preset first acceleration threshold is a preset maximum value of acceleration of the vehicle in the first direction; exceeding this value indicates for example that there is a risk of the cooling pump sucking air at the current suction port, i.e. the current suction port is in the air suction state. It should be understood that the acceleration threshold may for example be a single value, or multiple values; embodiments of the present disclosure are not restricted with regard to the specific number of values of the acceleration threshold.

It should be understood that the predetermined time period is a preset time interval; the current suction port is determined as being in the air suction state when, and only when, all values of the acceleration of the vehicle in the arrangement direction of the motor relative to the reducer within the preset time interval exceed the preset first acceleration threshold. It should be understood that embodiments of the present disclosure are not restricted with regard to the specific duration of the preset time period.

For example, the acceleration threshold may be set to be a single threshold, e.g. A0; then if the values of acceleration of the vehicle in the arrangement direction of the motor relative to the reducer (including, for example, in a direction S1 from the motor to the reducer, or in a direction S2 from the reducer to the motor) are all greater than A0 within a predetermined time T0, it is judged that the vehicle has experienced a predetermined change. For example, if the acceleration of the vehicle in the first direction is continuously greater than 0.5 g for 1 second (wherein the acceleration due to gravity, g, is generally taken to be 9.8 m/s²), it may for example be judged that the vehicle has experienced a predetermined change, and the suction ports are switched.

Alternatively, the acceleration threshold may also be set to be multiple threshold values. Specifically, for example, when the arrangement direction of the motor relative to the reducer is a transverse direction, the acceleration threshold may for example be set to comprise: an acceleration threshold A1 in direction S1 from the motor to the reducer (as shown in Fig. 1), and an acceleration threshold A2 in direction S2 from the reducer to the motor. In this case, a predetermined change occurring in the vehicle state may for example be described in more specific terms: for example, when cooling liquid is sucked in through the second suction port 320 (at which time, cooling liquid is concentrated at the reducer), the acceleration threshold A1 in direction S 1 from the motor to the reducer is for example determined as being a target acceleration threshold, captured values of acceleration in direction S 1 from the motor to the reducer within a predetermined time period are compared with the acceleration threshold A1, and when a value of acceleration in direction S1 from the motor to the reducer is greater than the acceleration threshold A1, this indicates for example that a large amount of cooling liquid might move to the motor, so the second suction port 320 is determined as being in the air suction state at this time, and the suction ports are switched.

When cooling liquid is sucked in through the first suction port 310 (at which time, cooling liquid is concentrated at the motor), the acceleration threshold A2 in direction S2 from the reducer to the motor is for example determined as being a target acceleration threshold, captured values of acceleration in direction S2 from the reducer to the motor within a predetermined time period are compared with the acceleration threshold A2, and when a value of acceleration in direction S2 from the reducer to the motor is greater than the acceleration threshold A2, this indicates for example that a large amount of cooling liquid might move to the reducer, so the first suction port 310 is determined as being in the air suction state at this time, and the suction ports are switched.

However, it should be understood that only a few examples of acceleration threshold settings have been given above, and embodiments of the present disclosure are not limited to this.

Based on the above, in the present application, a predetermined change occurring in the vehicle state comprises: the acceleration of the vehicle in the arrangement direction of the motor relative to the reducer exceeding a preset first acceleration threshold within a predetermined time period; with this configuration, while taking into account the influence of vehicle state on the air suction state, time and acceleration factors are comprehensively taken into account. Firstly, this makes it possible to conveniently capture changes in a state of motion of the vehicle with high sensitivity, so that when the vehicle is in a state that might affect the air suction situation at the suction port, such as turning sharply left/right, emergency braking, emergency starting, travelling uphill or travelling downhill, the acceleration in the arrangement direction of the motor relative to the reducer in the state of motion can be acquired promptly and effectively (the acceleration in this direction actually being the acceleration direction with the greatest influence on cooling liquid flow), and the acceleration can be evaluated, so as to effectively distinguish the air suction state subsequently. Secondly, with the configuration that the acceleration exceeds a preset first acceleration threshold within a predetermined time period, the further addition of a time limitation to the judgement condition can also prevent erroneous judgements that the suction port is in the air suction state due to sudden changes in the vehicle state caused by sudden, brief operational changes in vehicle running, thus increasing the accuracy with which the air suction state is distinguished subsequently.

In some embodiments, a predetermined change occurring in the vehicle state comprises: a height difference in a body structure of the vehicle in a first direction being greater than a preset first height difference threshold, the first direction being an arrangement direction of the motor relative to the reducer.

As above, the arrangement direction of the motor relative to the reducer mentioned here is the direction of a straight line extending through the motor and the reducer, e.g. may be represented as the direction of a line connecting centre points of the motor and the reducer. For example, when the electric drive device is arranged in a transverse direction in the vehicle, the arrangement direction of the motor relative to the reducer is for example the transverse direction.

Specifically, in the course of vehicle motion, changes in the state of the body structure might also cause flow of cooling liquid inside the electric drive device. In particular, when a height difference arises in the body structure of the vehicle in the arrangement direction of the motor relative to the reducer, the height difference will cause corresponding movement of cooling liquid, and thus might cause the current suction port to be in the air suction state.

The preset first height difference threshold is a preset maximum value of the height difference in the arrangement direction of the motor relative to the reducer. When this value is exceeded, a possible consequence is for example cooling liquid flow, causing an air suction situation. It should be understood that embodiments of the present disclosure are not restricted with regard to the specific value of the height difference threshold.

For example, the height difference threshold may be set to comprise: a first height difference threshold H1 by which the centre point of the motor is higher than the centre point of the reducer, and a second height difference threshold H2 by which the centre point of the reducer is higher than the centre point of the motor. When cooling liquid is sucked in through the second suction port 320 (at which time, cooling liquid is concentrated at the reducer), it is necessary to prevent an air suction situation at the second suction port 320 due to sudden flow of a large amount of cooling liquid towards the rear of the motor. In this case, the second height difference threshold H2 by which the centre point of the reducer is higher than the centre point of the motor is for example determined as being a target height difference threshold, a captured height difference by which the centre point of the reducer is higher than the centre point of the motor is compared with the second height difference threshold H2, and when the height difference by which the centre point of the reducer is higher than the centre point of the motor is greater than the second height difference threshold H2, this indicates for example that cooling liquid might move to the motor with high acceleration, so the second suction port 320 is determined as being in the air suction state at this time, and the suction ports are switched.

However, it should be understood that only an example of a height difference threshold setting has been given above, and embodiments of the present disclosure are not limited to this.

Based on the above, in the present application, a predetermined change occurring in the vehicle state comprises: a height difference in the body structure of the vehicle in the arrangement direction of the motor relative to the reducer being greater than a preset first height difference threshold; with this configuration, while taking into account the influence of vehicle state on the air suction state, the influence of changes in the vehicle's own structure (i.e. body structure) on cooling liquid flow are comprehensively taken into account, making it easier to effectively detect changes in the vehicle body structure when the vehicle is on a bumpy or inclined road or is travelling on an uphill or downhill section of road with a high gradient, and effectively distinguish the air suction state of the cooling pump at the current suction port on the basis of changes in the body structure, thus increasing the reliability and precision with which the air suction state is distinguished.

In some embodiments, the first suction port and the second suction port are arranged at different positions in a second direction, and a predetermined change occurring in the vehicle state comprises: the value of acceleration of the vehicle in the second direction exceeding a preset second acceleration threshold within a predetermined time period, the second direction being perpendicular to an arrangement direction of the motor relative to the reducer.

Being perpendicular to the arrangement direction of the motor relative to the reducer means a direction perpendicular to the arrangement direction of the motor relative to the reducer. Specifically, when for example the arrangement direction of the motor relative to the reducer is a transverse direction, the second direction indicates for example a longitudinal direction perpendicular to the transverse direction; this may include a direction of advance and a reversing direction of the motor vehicle.

It should be understood that the first suction port and the second suction port being arranged at different positions in the second direction means that the first suction port and second suction port are not disposed at the same position in the second direction, instead being arranged one in front of the other in the second direction.

Specifically, in the course of vehicle motion, changes in the state of the vehicle in the second direction might also cause flow of cooling liquid inside the electric drive device. For example, if direction N1 shown in Fig. 1 is the direction of travel of the vehicle, the arrangement direction of the motor relative to the reducer is the transverse direction, and the first suction port is disposed in front of the second suction port in the longitudinal direction, the first space of the motor and the second space of the reducer being in communication with each other in a front region. If the cooling pump is currently sucking in cooling liquid from the second suction port disposed in the second space of the reducer, the second suction port is for example disposed in a middle or rear region of the second space corresponding to the reducer at this time. In this case, when for example the vehicle experiences braking or deceleration, cooling liquid will move towards the front of the vehicle, and will flow to a front region of the second space corresponding to the reducer, and into the first space which is in communication with the front region of the second space. Thus, it will not be possible to suck in cooling liquid in the second suction port at this time, and an air suction situation will arise. Alternatively, if direction N2 shown in Fig. 1 is the direction of travel of the vehicle, the first suction port is disposed behind the second suction port in the longitudinal direction. If the first space of the motor and the second space of the reducer are in communication with each other in a rear region for example, and if the cooling pump is currently sucking in cooling liquid from the second suction port disposed in a middle or front region of the second space of the reducer, then cooling liquid will move towards the rear of the vehicle when the vehicle suddenly starts or accelerates, and will flow to a rear region of the second space corresponding to the reducer, and into the first space which is in communication with the rear region of the second space. Thus, at this time, the second suction port will also experience a situation whereby cooling liquid cannot be sucked in (i.e. an air suction situation).

It should be understood that the second acceleration threshold is merely intended to distinguish a threshold for acceleration in the second direction, not to limit it.

It should be understood that the preset second acceleration threshold is a preset maximum value of acceleration of the vehicle in the second direction; exceeding this value indicates for example that there is a risk of the cooling pump sucking air at the current suction port, i.e. the current suction port is in the air suction state. It should be understood that the acceleration threshold may for example be a single value, or multiple values; embodiments of the present disclosure are not restricted with regard to the specific number of values of the acceleration threshold. For example, if the acceleration of the vehicle in the second direction is continuously greater than 0.5 g for 1 second (wherein the acceleration due to gravity, g, is generally taken to be 9.8 m/s²), it may for example be judged that the vehicle has experienced a predetermined change, and the suction ports are switched.

It should be understood that the predetermined time period is a preset time interval; the current suction port is determined as being in the air suction state when, and only when, all values of the acceleration of the vehicle in the second direction exceed the preset second acceleration threshold within the preset time interval. It should be understood that embodiments of the present disclosure are not restricted with regard to the specific duration of the preset time period.

It should be understood that the process described above may for example be described in more specific terms. In some embodiments, the value of acceleration of the vehicle in the second direction exceeding a preset second acceleration threshold within a predetermined time period means: the value of acceleration of the vehicle in a first sub-direction of the second direction exceeds a corresponding preset second acceleration threshold within a predetermined time period, the first sub-direction of the second direction being a sub-direction from the first suction port towards the second suction port within the second direction; or the value of acceleration of the vehicle in a second sub-direction of the second direction exceeds a corresponding preset second acceleration threshold within a predetermined time period, the second sub-direction of the second direction being a sub-direction from the second suction port towards the first suction port within the second direction.

The first sub-direction of the second direction and the second sub-direction of the second direction are two sub-directions included in the second direction that are opposite to each other and lie along the same straight line. Specifically, the arrangement direction of the motor relative to the reducer is a transverse direction for example; in this case, the second direction is a longitudinal direction for example. In this case, the first sub-direction of the second direction may for example be a longitudinal first sub-direction from the first suction port towards the second suction port within the longitudinal direction, and the second sub-direction of the second direction may for example be a longitudinal second sub-direction from the second suction port towards the first suction port within the longitudinal direction.

For example, a configuration is possible whereby, if the cooling pump is currently sucking in cooling liquid from the second suction port, when the value of acceleration of the vehicle in the first sub-direction of the second direction (the sub-direction from the first suction port towards the second suction port within the second direction) exceeds the corresponding preset second acceleration threshold within a predetermined time period, this indicates that there might be a large amount of cooling liquid flowing from a spatial region near the second suction port to a spatial region near the first suction port; in this case, it may for example be confirmed that the second suction port is in the air suction state, and the switch is made to the first suction port sucking in cooling liquid. If the cooling pump is currently sucking in cooling liquid from the first suction port, when the value of acceleration of the vehicle in the second sub-direction of the second direction (the sub-direction from the second suction port towards the first suction port within the second direction) exceeds the corresponding preset second acceleration threshold within a predetermined time period, this indicates that there might be a large amount of cooling liquid flowing from a spatial region near the first suction port to a spatial region near the second suction port; in this case, it may for example be confirmed that the first suction port is in the air suction state, and the switch is made to the second suction port sucking in cooling liquid.

The process described above is now described in more specific terms in conjunction with specific embodiments. For example, refer to Fig. 1, in which the arrangement direction of the motor relative to the reducer is a transverse direction, and the first suction port 310 and the second suction port 320 are arranged at different positions in a longitudinal direction. For example, the second acceleration threshold may be set to be multiple threshold values. Specifically, the second acceleration threshold may for example be set to comprise: an acceleration threshold B2 in direction N2 (i.e. the first sub-direction of the second direction, in this case the sub-direction from the first suction port 310 towards the second suction port 320 within the longitudinal direction), and an acceleration threshold B 1 in direction N1 (i.e. the second sub-direction of the second direction, in this case the sub-direction from the second suction port 320 towards the first suction port 310 within the longitudinal direction).

In this case, for example, the arrangement direction of the motor relative to the reducer is the transverse direction, the direction of travel of the vehicle is direction N1, and the second suction port 320 is disposed behind the first suction port 310 in direction N1. A predetermined change occurring in the vehicle state may for example be described in more specific terms: for example, when cooling liquid is being sucked in via the second suction port 320 from a middle or rear region of the second space in which the reducer is located, the acceleration threshold B2 in direction N2 (i.e. the first sub-direction of the second direction) for example is determined as being a target acceleration threshold, captured values of acceleration in direction N2 are compared with the acceleration threshold B2, and when the values of acceleration in direction N2 are all greater than the acceleration threshold B2 within a preset time (depending on the vehicle travelling situation and the arrangement of the electric drive device, this may for example correspond to sudden deceleration or braking of the vehicle), and due to the fact that the first space of the motor and the second space of the reducer are in communication with each other in a front region, this indicates that a large amount of cooling liquid might move to a front region of the second space and to the first space which is in communication with the front region of the second space, so it is determined at this time that the second suction port 320 is in the air suction state, and the suction ports are switched.

Alternatively, for example, the arrangement direction of the motor relative to the reducer is the transverse direction, the direction of travel of the vehicle is direction N2, and the second suction port 320 is disposed in front of the first suction port 310 in direction N2. If cooling liquid is currently being sucked in via the second suction port 320 from a middle or front region of the second space in which the reducer is located, the acceleration threshold B2 in direction N2 for example is determined as being a target acceleration threshold, captured values of acceleration in direction N2 are compared with the acceleration threshold B2, and when the values of acceleration in direction N2 are all greater than the acceleration threshold B2 within a preset time (depending on the vehicle travelling situation and the arrangement of the electric drive device, this may for example correspond to the vehicle suddenly accelerating or suddenly starting from a standstill), and the first space of the motor and the second space of the reducer are in communication with each other in a rear region, this indicates that a large amount of cooling liquid might move to a rear region of the second space and to the first space which is in communication with the rear region of the second space, so it is determined at this time that the second suction port 320 is in the air suction state, and the suction ports are switched.

However, it should be understood that only a few examples of acceleration threshold settings and electric drive device configuration have been given above, and embodiments of the present disclosure are not limited to this.

Based on the above, in the present application, a predetermined change occurring in the vehicle state comprises: the value of acceleration of the vehicle in a second direction exceeding a preset second acceleration threshold within a predetermined time period, the second direction being perpendicular to the arrangement direction of the motor relative to the reducer; with this configuration, while taking into account the influence of vehicle state on the air suction state, time and acceleration factors are comprehensively taken into account. Firstly, this makes it possible to conveniently capture changes in a state of motion of the vehicle with high sensitivity, so that when the vehicle is in a state that might affect the air suction situation at the suction port, such as emergency braking, emergency starting, travelling uphill or travelling downhill, the acceleration perpendicular to the arrangement direction of the motor relative to the reducer in the state of motion can be acquired promptly and effectively (the acceleration in this direction might cause a large amount of cooling liquid to move forwards or rearwards in the first or second space, so that the original suction port is unable to suck in cooling liquid), and the acceleration can be evaluated, so as to effectively distinguish the air suction state subsequently. Secondly, with the configuration that the acceleration exceeds a preset first acceleration threshold within a predetermined time period, the further addition of a time limitation to the judgement condition can also prevent erroneous judgements that the suction port is in the air suction state due to sudden changes in the vehicle state caused by sudden, brief operational changes in vehicle running, thus increasing the accuracy with which the air suction state is distinguished subsequently.

In some embodiments, the first suction port and the second suction port are arranged at different positions in a second direction, and a predetermined change occurring in the vehicle state comprises: a height difference in a body structure of the vehicle in the second direction being greater than a preset second height difference threshold, the second direction being perpendicular to an arrangement direction of the motor relative to the reducer.

As above, being perpendicular to the arrangement direction of the motor relative to the reducer means a direction perpendicular to the arrangement direction of the motor relative to the reducer. Specifically, when for example the arrangement direction of the motor relative to the reducer is a transverse direction, the second direction indicates for example a longitudinal direction perpendicular to the transverse direction.

As above, the first suction port and the second suction port being arranged at different positions in the second direction means that the first suction port and second suction port are not disposed at the same position in the second direction, instead being arranged one in front of the other in the second direction.

Specifically, in the course of vehicle motion, changes in the state of the body structure might also cause flow of cooling liquid inside the electric drive device. In particular, if the arrangement direction of the motor relative to the reducer is the transverse direction, and the cooling pump is currently sucking in cooling liquid from the second suction port disposed in the second space of the reducer, when a height difference arises in the vehicle body structure perpendicular to the arrangement direction of the motor relative to the reducer, the height difference will cause corresponding movement of cooling liquid; at this time, cooling liquid will move towards the front or rear of the vehicle due to the state of motion of the vehicle, and will flow to a front region or a rear region of the second space corresponding to the reducer, and into the first space which is in communication with the front region or rear region of the second space, and thus might cause the current second suction port to be in the air suction state.

The preset second height difference threshold is a preset maximum value of the height difference perpendicular to the arrangement direction of the motor relative to the reducer. When this value is exceeded, a possible consequence is for example cooling liquid flow, causing an air suction situation. It should be understood that embodiments of the present disclosure are not restricted with regard to the specific value of the height difference threshold.

It should be understood that the process described above may for example be described in more specific terms. In some embodiments, a height difference in a body structure of the vehicle in the second direction being greater than a preset second height difference threshold means that: a height difference which the body structure of the vehicle has in a first sub-direction of the second direction is greater than a corresponding second preset height difference threshold, the first sub-direction of the second direction being a sub-direction from the first suction port towards the second suction port in the second direction; or a height difference which the body structure of the vehicle has in a second sub-direction of the second direction is greater than a corresponding second preset height difference threshold, the second sub-direction of the second direction being a sub-direction from the second suction port towards the first suction port in the second direction.

The first sub-direction of the second direction and the second sub-direction of the second direction are two sub-directions included in the second direction that are opposite to each other and lie along the same straight line. Specifically, the arrangement direction of the motor relative to the reducer is a transverse direction for example; in this case, the second direction is a longitudinal direction for example. In this case, the first sub-direction of the second direction may for example be a longitudinal first sub-direction from the first suction port towards the second suction port within the longitudinal direction, and the second sub-direction of the second direction may for example be a longitudinal second sub-direction from the second suction port towards the first suction port within the longitudinal direction.

The process described above is now described in more specific terms in conjunction with specific embodiments. For example, referring to Fig. 1, if the arrangement direction of the motor relative to the reducer is a transverse direction, it is clear that the second direction is a longitudinal direction of the vehicle. If the direction of travel of the vehicle is direction N2, and the second suction port 320 is disposed in front of the first suction port 310 in direction N2. the second height difference threshold may in this case be set to comprise: a height difference threshold D2 between a rear end and a front end of the electric drive device in a longitudinal first sub-direction (i.e. a first sub-direction of the second direction, in this case corresponding to direction N2), and a height difference threshold D1 between the rear end and the front end of the electric drive device in a longitudinal second sub-direction (i.e. a second sub-direction of the second direction, in this case corresponding to direction N1).

When the vehicle is travelling in direction N1 as the direction of advance, the electric drive device is for example disposed transversely, and the second suction port 320 is for example disposed behind the first suction port 310 in the longitudinal direction, as shown in Fig. 1. At this time, cooling liquid is for example sucked in from the second suction port disposed in a middle or rear region of the second space of the reducer via the second suction port 320; in this case, it is necessary to prevent an air suction situation at the second suction port 320 due to sudden flow of a large amount of cooling liquid towards a front region of the second space and a front region of the first space in communication with the second space. At this time, for example, the height difference threshold D1 between the rear end and the front end of the electric drive device in direction N1 (i.e. the second sub-direction of the second direction) is determined as being a target height difference threshold, a captured height difference between the rear end and the front end of the electric drive device in direction N1 is compared with the height difference threshold D1, and when the height difference between the rear end and the front end of the electric drive device in direction N1 is greater than the height difference threshold D1 (e.g. the vehicle is going downhill), this indicates for example that a large amount of cooling liquid might move from a rear region of the second space to a front region of the second space and into the first space which is in communication with the front region of the second space, so it is determined at this time that the second suction port 320 is in the air suction state, and the suction ports are switched.

However, it should be understood that only an example of a second height difference threshold setting has been given above, and embodiments of the present disclosure are not limited to this.

Based on the above, in the present application, a predetermined change occurring in the vehicle state comprises: a height difference in the body structure of the vehicle perpendicular to the arrangement direction of the motor relative to the reducer being greater than a preset second height difference threshold; with this configuration, while taking into account the influence of vehicle state on the air suction state, the influence of changes in the vehicle's own structure (i.e. body structure) on cooling liquid flow are comprehensively taken into account, making it easier to effectively detect changes in the vehicle body structure when the vehicle is travelling on an uphill or downhill section of road with a high gradient, and effectively distinguish the air suction state of the cooling pump at the current suction port on the basis of changes in the body structure, thus increasing the reliability and precision with which the air suction state is distinguished.

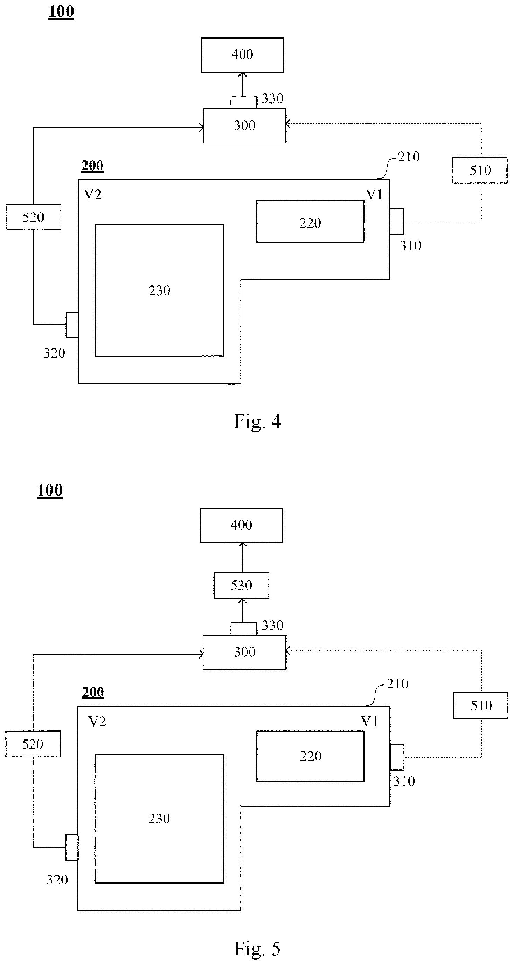

Fig. 4 shows a schematic drawing of a cooling system according to an embodiment of the present disclosure, showing a first filter 510 and a second filter 520.

Referring to Fig. 4, the cooling system 100 for example further comprises the first filter 510 corresponding to the first space V1, and the second filter 520 corresponding to the second space V2. The size of the first filter 510 is smaller than or equal to that of the second filter 520.

It should be understood that the first filter and the second filter are both intended to filter cooling liquid. The first filter and the second filter may for example be the same type of filter, or different types of filter. Embodiments of the present disclosure are not restricted with regard to the specific types of the first filter and second filter.

For example, the first filter 510 and second filter 520 are configured to be integrated within the housing 210 of the electric drive device 200.

As a result of configuring the cooling system to further comprise the first filter corresponding to the first space and the second filter corresponding to the second space, and configuring the size of the first filter to be smaller than or equal to that of the second filter, the filter with the larger volume is provided in the second space containing the reducer, which needs cooling liquid to be sucked in frequently, so as to achieve full and effective filtering of cooling liquid; and based on actual needs, the first filter with the smaller size is provided at the motor where the relative number of times that cooling liquid is sucked in is smaller (generally, when air suction arises at the suction port at the reducer, cooling liquid at a rear side of the motor is sucked in through the suction port at the motor). Thus, under the precondition that cooling liquid is sucked in effectively, the need for a reduced manufacturing cost and a structure with a compact size is effectively taken into account.

Fig. 5 shows a schematic drawing of a cooling system according to an embodiment of the present disclosure, showing a third filter 530.

Referring to Fig. 5, in some embodiments, the cooling system further comprises the third filter 530.

For example, the third filter may be disposed between the cooling pump 300 and the cooler 400 as a main filter, so as to subject the cooling liquid sucked in by the cooling pump 300 to further filtering before the cooling liquid enters the cooler 400, thereby ensuring that the cooling liquid entering the cooler is pure and impurity-free.

Based on the above, in the present application, as a result of configuring the cooling system to further comprise the third filter, building on the primary filtering of cooling liquid from the first and second spaces by means of the first and second filters, after being sucked into the cooling pump, cooling liquid from the cooling pump outlet is filtered again by means of the third filter, thereby effectively increasing the purity of cooling liquid entering the cooler, and also helping to increase the efficiency of the oil pump due to the fact that the pressure drop of primary filtering at the first filter and second filter is relatively low.

In the present application, specific terms are used to describe embodiments of the present application. For example, "first/second embodiment", "an embodiment", and/or "some embodiments" refer to a feature, structure, or characteristic related to at least one embodiment of the present application. Therefore, it should be stressed and noted that "an embodiment", "one embodiment", or "an alternative embodiment" mentioned two or more times in different places herein does not necessarily refer to the same embodiment. In addition, certain features, structures or characteristics in one or more embodiments of the present application may be combined appropriately.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present invention and should not be regarded as limiting it. Although certain exemplary embodiments of the present invention have been described, those skilled in the art will readily understand that many modifications may be made to the exemplary embodiments without departing from the novel teaching and advantages of the present invention. Therefore, all such modifications are intended to be included within the scope of the present invention as defined by the claims. It should be understood that the above is a description of the present invention, and should not be deemed to be limited to the specific embodiments disclosed; in addition, modifications made to the disclosed embodiments and other embodiments are intended to be included within the scope of the attached claims. The present invention is defined by the claims and their equivalents.

## Claims

1. A cooling system for an electric drive device of a vehicle, **characterized in that** the electric drive device comprises a housing, a motor accommodated in a first space in the housing and a reducer accommodated in a second space in the housing;
the cooling system comprises:
a cooling pump having a first suction port and a second suction port connected to the first space and the second space respectively, wherein the cooling pump is operatively configured to alternatively suck cooling liquid from the first suction port or the second suction port;
a cooler connected to an outlet of the cooling pump to receive the cooling liquid sucked from the first suction port or the second suction port.

2. The cooling system according to claim 1, wherein when one of the first suction port and the second suction port is in an air suction state, the cooling pump is operated to switch from sucking the cooling liquid from the one of the first suction port and the second suction port to sucking the cooling liquid from the other of the first suction port and the second suction port.

3. The cooling system according to claim 2, wherein the switch comprises changing the rotation direction of the cooling pump.

4. The cooling system according to claim 2, wherein it is determined that the one of the first suction port and the second suction port is in the air suction state when a predetermined change occurs in the output signal of the cooling pump or a predetermined change occurs in the vehicle state.

5. The cooling system according to claim 2, wherein it is determined that the one of the first suction port and the second suction port is in the air suction state when a predetermined change occurs in the output signal of the cooling pump and a predetermined change occurs in the vehicle state.

6. The cooling system according to claim 4 or 5, wherein the predetermined change occurs in the output signal of the cooling pump comprises that the output signal of the cooling pump is lower than a preset output threshold.

7. The cooling system according to claim 4 or 5, wherein the output signal of the cooling pump comprises at least one of an output current or voltage signal of the cooling pump and an output torque signal of the cooling pump.

8. The cooling system according to claim 4 or 5, wherein the predetermined change occurs in the vehicle state comprises that the acceleration value of the vehicle in a first direction exceeds a preset first acceleration threshold within a predetermined time, and the first direction is the arrangement direction of the motor relative to the reducer.

9. The cooling system according to claim 4 or 5, wherein the predetermined change occurs in the vehicle state comprises that the height difference of the vehicle body structure along a first direction is greater than a preset first height difference threshold, and the first direction is the arrangement direction of the motor relative to the reducer.

10. The cooling system according to claim 4 or 5, wherein the first suction port and the second suction port are arranged at different positions along the second direction, and the predetermined change occurs in the vehicle state comprises that the value of the acceleration of the vehicle in the second direction exceeds a preset second acceleration threshold within a predetermined time, and the second direction is perpendicular to the arrangement direction of the motor relative to the reducer.

11. The cooling system according to claim 10, wherein the value of the acceleration of the vehicle in the second direction exceeds a preset second acceleration threshold within a predetermined time period comprises:
the value of the acceleration of the vehicle in the first sub-direction of the second direction exceeds the corresponding preset second acceleration threshold within a predetermined time, and the first sub-direction of the second direction refers to the sub-direction from the first suction port towards the second suction port in the second direction; or
the value of the acceleration of the vehicle in the second sub-direction of the second direction exceeds the corresponding preset second acceleration threshold within a predetermined time period, and the second sub-direction of the second direction refers to the sub-direction from the second suction port to the first suction port in the second direction.

12. The cooling system according to claim 4 or 5, wherein the first suction port and the second suction port are arranged at different positions along the second direction, and the predetermined change of the vehicle state comprises that the height difference in the vehicle body structure in the second direction is greater than a preset second height difference threshold, and the second direction is perpendicular to the arrangement direction of the motor relative to the reducer.

13. The cooling system according to claim 12, wherein the height difference of the vehicle body structure along the second direction is greater than a preset second height difference threshold comprises:
the height difference of the vehicle body structure along the first sub-direction of the second direction is greater than the corresponding second preset height difference threshold, and the first sub-direction of the second direction refers to the sub-direction from the first suction port towards the second suction port in the second direction; or
the height difference of the vehicle body structure along the second sub-direction of the second direction is greater than the corresponding second preset height difference threshold, and the second sub-direction of the second direction refers to the sub-direction from the second suction port to the first suction port in the second direction.

14. The cooling system according to claim 1, wherein the cooling system further comprises a first filter corresponding to the first space and a second filter corresponding to the second space,
wherein a size of the first filter is smaller than or equal to a size of the second filter.

15. A vehicle comprising a cooling system for an electric drive device according to any one of claims 1 to 14.
